Europäisches Patentamt

(19) European Patent Office

Office européen des brevets

(11) Numéro de publication: **0 295 163**
**B1**

(12) **FASCICULE DE BREVET EUROPEEN**

(45) Date de publication du fascicule du brevet:
**19.09.90**

(51) Int. Cl.⁵: **F16B 37/04**

(21) Numéro de dépôt: **88401207.1**

(22) Date de dépôt: **18.05.88**

(54) **Ecrou encagé flottant perfectionné.**

(30) Priorité: **10.06.87 FR 8708075**

(43) Date de publication de la demande:
**14.12.88 Bulletin 88/50**

(45) Mention de la délivrance du brevet:
**19.09.90 Bulletin 90/38**

(84) Etats contractants désignés:
**DE GB**

(56) Documents cités:
**GB-A- 492 686**
**GB-A- 597 569**
**US-A- 2 381 233**

(73) Titulaire: **SIMMONDS S.A., 5 rue Michelet,
F-92152 Suresnes Cédex(FR)**

(72) Inventeur: **Pouplier, Christian, 5 place du Hallai,
F-72000 Le Mans(FR)**

(74) Mandataire: **Durand, Yves Armand Louis et al, Cabinet Z.
Weinstein 20, Avenue de Friedland, F-75008 Paris(FR)**

## Description

La présente invention a essentiellement pour objet un écrou encagé flottant perfectionné.

On connaît déjà, d'après le document GB-A 492 686 par exemple, des écrous encagés comprenant, d'une manière générale, une cage présentant en section transversale sensiblement la forme d'un U dans lequel est retenu un écrou à embase par l'intermédiaire d'un moyen approprié.

Ce moyen peut être constitué par un circlips clippé sur les côtés de la cage et retenant l'écrou proprement dit dans ladite cage.

Un tel montage d'écrou présente l'intérêt de pouvoir d'une part rattraper les jeux lors du montage par vissage, et d'autre part de permettre le remplacement de l'écrou après démontage du circlips. Toutefois, ce genre de montage présente des inconvénients en ce sens que, lors d'un remplacement de l'écrou, le circlips demeure difficile à démonter et à remonter, et que de plus, ledit circlips peut être mal monté. Il en résulte que dans le cas de l'assemblage de pièces en rotation et/ou en vibration, le circlips mal monté peut s'échapper de la cage et provoquer des détériorations graves.

Pour remédier à cela, il a été proposé, dans la demande de brevet européen EP-A 0 272 133, publiée le 22. 06. 88, d'utiliser, à la place du circlips, une platine interposée entre le fond de la cage et l'embase de l'écrou et munie d'une part de languettes coopérant avec la cage afin de retenir ladite platine dans la cage, et d'autre part de pattes repliables sur l'embase d'écrou pour retenir ce dernier dans la cage. Ainsi, l'écrou pouvait être introduit dans ou retiré de la cage par pliage des pattes en question.

Cependant, un tel écrou encagé présente des inconvénients tenant au fait que le pliage des pattes à l'aide d'un outil, pour monter ou démonter l'écrou, était une opération délicate et difficile à exécuter. Au surplus, il y avait un risque qu'à la longue, après un certain nombre de pliages, les pattes se rompent, de sorte que le système devient inutilisable et doit être remplacé, ce qui pose des problèmes, notamment dans le cas où la cage de l'écrou est collée ou maintenue par une bande adhésive sur une pièce.

Aussi, la présente invention a pour but de pallier ces inconvénients en proposant un écrou encagé flottant perfectionné qui comprend un écrou à embase qui peut être très facilement monté dans la cage et retiré de celle-ci, et cela sans aucun risque, même à la longue, de détérioration ou de rupture.

A cet effet, l'invention a pour objet un écrou encagé flottant perfectionné et du type comprenant une cage, ou première cage, présentant en section transversale sensiblement la forme d'un U dans lequel est retenu de manière flottante un écrou à embase, caractérisé en ce que ladite cage est logée dans une deuxième cage présentant elle aussi sensiblement une forme de U en section transversale et dont les branches coopèrent avec les branches du U de la première cage pour assurer le montage amovible de la première cage dans la deuxième cage.

Suivant une autre caractéristique de l'invention, la coopération des branches du U des deux cages est assurée par au moins un orifice et au moins une languettes saillante prévus respectivement sur les branches du U de la deuxième cage et de la première cage ou l'inverse.

Suivant une réalisation préférée, les branches du U de la deuxième cage sont constituées chacune par deux pattes comportant un orifice, tandis que les branches du U de la première cage comportent au moins deux languettes coopérant respectivement avec ces orifices.

On précisera ici que la ou les languettes précitées sont réalisées par un ou des crevés avec découpes dans les deux branches du U de l'une des cages.

Selon encore une autre caractéristique de l'invention, les branches du U de la première cage comportent chacune à leur sommet une patte permettant le montage et le retrait de cette cage dans ou hors de la deuxième cage par pincement desdites branches.

La base du U de la deuxième cage porte un fût de rivet ainsi qu'au moins un ergot empêchant la rotation de cette cage une fois fixée par rivetage sur une pièce quelconque.

Suivant une réalisation préférée, le fût du rivet précité est porté par une platine interposée entre la base du U de la première et de la deuxième cage et traverse la base du U de la deuxième cage.

On précisera encore ici que les deux pattes de chaque branche du U de la deuxième cage définissent entre elles une échancrure dans laquelle peuvent avantageusement se débattre des languettes appartenant à l'embase d'écrou et traversant les branches du U de la première cage.

Mais d'autres avantages et caractéristiques de l'invention apparaîtront mieux dans la description détaillée qui suit et se réfère aux dessins annexés donnés uniquement à titre d'exemple, et dans lesquels :

La figure 1 est une vue en perspective d'un écrou encagé flottant conforme aux principes de l'invention ; et

La figure 2 est une vue en perspective de l'écrou montré sur la figure 1, mais équipé d'un moyen de rivetage.

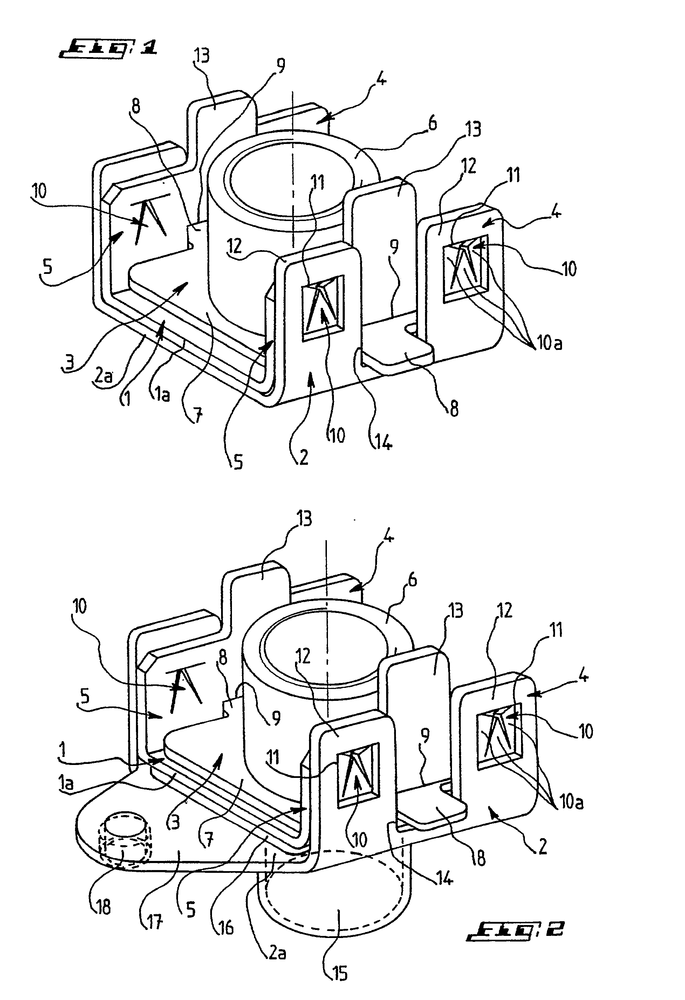

En se reportant à la figure 1, on voit qu'un écrou encagé flottant selon cette invention comprend essentiellement une première cage 1 présentant sensiblement la forme d'un U en section transversale et dans laquelle est retenu de manière flottante un écrou 3, cette première cage étant logée dans une deuxième cage 2 présentant elle aussi sensiblement une forme de U en section transversale, de sorte que les branches 4 de la deuxième cage 2 puissent coopérer avec les branches 5 de la première cage 1 pour assurer le montage amovible de la première cage dans la deuxième cage, comme on le décrira en détail plus loin.

L'écrou proprement dit comporte, comme cela est connu en soi, un fût 6 intérieurement fileté et une embase 7 munie de languettes opposées 8 traversant par des ouvertures 9 les branches 5 de la première cage 1.

Les branches 5 du U formant la première cage 1 comportent chacune des languettes 10 faisant saillie vers l'extérieur desdites branches et susceptibles de s'engager par clippage dans des orifices 11 ménagés dans chaque branche 4 du U formant la deuxième cage 2.

Les languettes 10 peuvent être réalisées de toute manière appropriée, c'est-à-dire formées par exemple, comme cela est représenté, de groupes de trois petites languettes 10a découpées et réalisées par des crevés dans les deux branches 4 du U de la deuxième cage 2.

On pourrait parfaitement, sans sortir du cadre de l'invention, réaliser la disposition inverse de celle représentée sur les figures, à savoir que les languettes 10 seraient prévues sur les branches 4 de la deuxième cage 2 et feraient saillie vers l'intérieur de ladite cage, et que les orifices 11 seraient aménagés dans les branches 5 de la première cage 1.

Suivant l'exemple représenté, chaque branche 4 du U constituant la deuxième cage 2 est formée de deux pattes 12 comportant chacune un orifice tel que 11 et dans lequel peut venir s'accrocher ou se clipper un groupe de petites languettes 10a.

On a montré en 13 des pattes prévues respectivement à la partie supérieure des branches 5 de la première cage 1 et permettant, par pincement, le montage et le retrait de la cage 1 portant l'écrou 3 dans ou hors de la deuxième cage 2, comme on le décrira plus loin.

Les pattes 12 des branches de la deuxième cage 2 définissent entre elles, comme on le voit sur les figures, une échancrure 14 dans laquelle peuvent se débattre les languettes 8 appartenant à l'embase 7 de l'écrou 3 et traversant, de manière flottante, les branches 5 de la première cage 1, et cela en passant dans les ouvertures 9 mentionnées précédemment. On notera ici que les ouvertures 9 sont plus larges que les languettes 8, de façon à permettre un débattement horizontal de ces languettes qui peuvent aussi se débattre horizontalement dans l'échancrure 14 entre les pattes 12 de la deuxième cage 2.

Bien que cela ne soit pas visible sur la figure 1, il faut dire que l'embase 7 de l'écrou 3 comporte, comme connue en soi, un orifice au droit du fût taraudé 6, et cela pour laisser le passage à un élément fileté, tel que par exemple une vis. Egalement, la base 2a du U constituant la deuxième cage 2 comporte, elle aussi, un orifice au droit du fût 6 de l'écrou 3, et cela pour la même raison que ci-dessus.

L'orifice ménagé dans la base 2a précitée est avantageusement mis à profit pour recevoir un fût de rivet que l'on décrira maintenant en détail en se reportant à la figure 2.

Ce fût de rivet, montré en 15, est solidaire d'une platine 16 interposée entre la base 2a de la deuxième cage 2 et la base 1a de la première cage 1.

La base 2a de la deuxième cage 2 comporte de préférence, et dans le même plan, un prolongement 17 portant, en partie inférieure un ergot, têton ou analogue 18.

Ainsi, pour fixer l'écrou encagé selon la figure 2 sur une pièce, le fût de rivet 15 sera introduit dans un trou ménagé dans cette pièce, de même que l'ergot 18 sera introduit dans un autre trou de ladite pièce, de sorte qu'après rivetage par écrasement et évasement du fût 15, la cage 2 et tout ce qu'elle porte sera empêché de tourner, sous l'effet du vissage par exemple, grâce à l'ergot 18.

L'écrou encagé montré sur la figure 1 peut être fixé par collage ou par bande adhésive, et cela par la base 2a de la deuxième cage 2, sur une pièce quelconque, tandis que l'écrou représenté sur la figure 2 sera évidemment fixé sur la pièce par rivetage.

Mais, pour une meilleure compréhension, on expliquera brièvement ci-après comment s'effectuent le montage et le démontage de cet écrou.

En se référant tout d'abord à la figure 1, on comprend qu'en rapprochant par pincement, tout simplement à l'aide des doigts, les branches élastiques 5 de la cage 1, et cela en s'aidant des pattes 13, on fera sortir les languettes 10 des orifices 11 ménagés dans les branches 4 de la deuxième cage 2, de sorte que la première cage 1 portant l'écrou 3 pourra être très facilement extraite de la deuxième cage 2. Ceci étant fait, on pourra très facilement extraire l'écrou 3 de la cage 1 pour le remplacer, et cela par écartement des branches 5, de façon à extraire les languettes 8 des ouvertures 9 ménagées dans les branches 5.

Le nouvel écrou étant mis en place dans la cage 1, cette cage pourra aisément être introduite dans la cage 2 par pincement, encore une fois, des branches 5, de sorte que les languettes 10 se clippent dans les orifices 11 des branches 4 de la deuxième cage 2.

En se reportant maintenant à la figure 2, le montage et le démontage s'effectuent de la même façon que précédemment, sauf qu'ici, la platine 16 portant le fût de rivet 15 est montée, au travers de l'orifice qu'elle comporte, dans la base 2a de la deuxième cage 2, avant que soit introduite la première cage 1 dans cette deuxième cage. Lorque cette deuxième cage est rivetée sur une pièce grâce au fût de rivet 15, et cela par épanouissement de l'extrémité du fût qui vient en appui contre le bord de l'orifice de la pièce dans laquelle est introduite ledit fût, la cage 1 pourra être démontée et remontée dans la cage 2, exactement comme cela a été expliqué plus haut.

On insistera encore ici sur le fait que l'écrou selon cette invention peut comporter un fût de rivet ou non, et cela selon les besoins. Il suffira de munir ou non l'écrou d'une platine 16 portant le fût de rivet 15.

Bien entendu, l'invention n'est nullement limitée aux modes de réalisation décrits et illustrés qui n'ont été donnés qu'à titre d'exemple.

C'est ainsi qu'on pourrait parfaitement prévoir un fût de rivet solidaire de ou venant de matière avec la base 2a de la deuxième cage 2.

Egalement, l'ergot 18 peut être prévu ou omis. De même, le nombre de languettes des branches d'une cage et le nombre d'orifices coopérant avec ces languettes dans les branches de l'autre cage peuvent être quelconques.

## Revendications

1. Ecrou encagé flottant perfectionné et du type comprenant une cage ou première cage (1), présentant en section transversale sensiblement la forme d'un U dans lequel est retenu de manière flottante un écrou (3) à embase (7), caractérisé en ce que ladite cage (1) est logée dans une deuxième cage (2) présentant elle aussi sensiblement une forme de U en section transversale et dont les branches (4) coopèrent avec les branches (5) du U de la première cage (1) pour assurer le montage amovible de la première cage dans la deuxième cage.

2. Ecrou encagé selon la revendication 1, caractérisé en ce que la coopération des branches (4, 5) du U des deux cages (1, 2) est assurée par au moins un orifice (11) et au moins une languette (10) saillante prévus respectivement sur les branches du U de la deuxième cage (2) et de la première cage (1), ou l'inverse.

3. Ecrou encagé selon la revendication 1 ou 2, caractérisé en ce que les branches (4) du U de la deuxième cage (2) sont constituées chacune par deux pattes (12) comportant chacune un orifice (11), tandis que les branches (5) du U de la première cage (1) comportent au moins deux languettes (10) coopérant respectivement avec ces orifices.

4. Ecrou selon l'une des revendications 1 à 3, caractérisé en ce que la ou les languettes précitées (10) sont réalisées par un ou des crevés avec découpes dans les deux branches du U de l'une des cages.

5. Ecrou selon l'une des revendications 1 à 4, caractérisé en ce que les branches (5) du U de la première cage (1) comportent chacune à leur sommet une patte (13) permettant le montage et le retrait de cette cage dans ou hors de la deuxième cage (2) par pincement desdites branches.

6. Ecrou selon l'une des revendications 1 à 5, caractérisé en ce que la base (2a) du U de la deuxième cage (2) porte un fût de rivet (15) ainsi qu'au moins un ergot (18) empêchant la rotation de cette cage une fois fixée par rivetage sur une pièce quelconque.

7. Ecrou selon la revendication 6, caractérisé en ce que le fût de rivet précité (15) est porté par une platine (16) interposée entre la base (1a, 2a) du U de la première (1) et de la deuxième cage (2) et traverse la base (2a) du U de la deuxième cage (2).

8. Ecrou selon la revendication 3, caractérisé en ce que les deux pattes (12) de chaque branche (4) du U de la deuxième cage (2) définissent entre elles une échancrure (14) dans laquelle peuvent se débattre des languettes (8) appartenant à l'embase d'écrou (7) et traversant les branches (5) du U de la première cage (1).

## Patentansprüche

1. Verbesserte schwebende, in einem Gehäuse aufgenommene Schraubenmutter der Gattung, die ein Gehäuse oder erstes Gehäuse (1) aufweist, dessen Querschnitt im wesentlichen die Gestalt eines U aufweist, in dem eine Mutter (3) mit einem Ansatz (7) schwebend gehalten wird, dadurch gekennzeichnet, daß das besagte Gehäuse (1) in einem zweiten Gehäuse (2) aufgenommen wird, dessen Querschnitt auch im wesentlichen die Gestalt eines U aufweist und dessen Schenkel (4) mit den Schenkeln (5) des U des ersten Gehäuses (1) zusammenwirken, um die trennbare Montage des ersten Gehäuses im zweiten Gehäuse zu ermöglichen.

2. In einem Gehäuse aufgenommene Schraubenmutter nach Anspruch 1, dadurch gekennzeichnet, daß das Zusammenwirken der Schenkel (4, 5) des U der beiden Gehäuse (1, 2) von wenigstens einer Öffnung (11) und wenigstens einem ausragenden Lappen (10), die auf den Schenkeln des U des zweiten Gehäuses (2) bzw. des ersten Gehäuses (1) oder umgekehrt vorgesehen sind, durchgeführt ist.

3. In einem Gehäuse aufgenommene Schraubenmutter nach Anspruch 1 oder 2, dadurch gekennzeichnet, daß jeder der Schenkel (4) des U des zweiten Gehäuses (2) aus zwei Laschen (12) besteht, von denen jede eine Öffnung (11) aufweist, während die Schenkel (5) des U des ersten Gehäuses (1) wenigstens zwei mit diesen Öffnungen jeweils zusammenwirkende Lappen (10) aufweisen.

4. Schraubenmutter nach einem der Ansprüche 1 bis 3, dadurch gekennzeichnet, daß der oder die besagten Lappen (10) aus einem oder aus Einschneiden mit Stanzen in den beiden Schenkeln des U von einem der Gehäuse gebildet sind.

5. Schraubenmutter nach einem der Ansprüche 1 bis 4, dadurch gekennzeichnet, daß jeder der Schenkel (5) des U des ersten Gehäuses (1) an dessen Oberseite eine Lasche (13) aufweist, die die Montage und die Entnahme dieses Gehäuses in das zweite Gehäuse (2) bzw. aus dem zweiten Gehäuse (2) durch Klemmen der besagten Schenkel ermöglicht.

6. Schraubenmutter nach einem der Ansprüche 1 bis 5, dadurch gekennzeichnet, daß der Fuß (2a) des U des zweiten Gehäuses (2) ein Nietrohr (15) sowie wenigstens einen Nocken (18) trägt, der die Drehung dieses Gehäuses, nachdem es auf einem beliebigen Teil durch Nietung befestigt worden ist, verhindert.

7. Schraubenmutter nach Anspruch 6, dadurch gekennzeichnet, daß das besagte Nietrohr (15) von einer zwischen dem Fuß (1a, 2a) des U des ersten (1) und des zweiten Gehäuses (2) zwischengestellten Halteplatte (16) getragen wird und den Fuß (2a) des U des zweiten Gehäuses (2) durchdringt.

8. Schraubenmutter nach Anspruch 3, dadurch gekennzeichnet, daß die beiden Laschen (12) von jedem Schenkel (4) des U des zweiten Gehäuses (2) untereinander eine Aussparung (14) bilden, in der sich die zum Mutteransatz (7) gehörenden und die Schenkel (5) des U des ersten Gehäuses (1) durchdringenden Lappen (8) bewegen können.

## Claims

1. Improved floating caged nut of the type comprising a cage, or first cage (1), substantially in the shape of a U in cross-section in which a nut (3) with a collar (7) is retained in a floating manner, characterized in that the said cage (1) is housed in a second cage (2) also substantially in the shape of a U in cross-section and whose legs (4) co-operate with the legs (5) of the U of the first cage (1) to provide the removable mounting of the first cage in the second cage.

2. Caged nut according to claim 1, characterized in that the co-operation of the legs (4, 5) of the U of both cages (1, 2) is effected by at least one opening (11) and at least one protruding lug (10) provided respectively on the legs of the U of the second cage (2) and of the first cage (1), or inversely.

3. Caged nut according to claim 1 or 2, characterized in that the legs (4) of the U of the second cage (2) are each formed of two tabs (12) each of which comprising an opening (11), whereas the legs (5) of the U of the first cage (1) comprise at least two lugs (10) co-operating respectively with these openings.

4. Nut according to one of claims 1 ot 3, characterized in that the aforesaid lug or lugs (10) are made from one or several lancings with cuttings in both legs of the U of one of the cages.

5. Nut according to one of claims 1 to 4, characterized in that each of the legs (5) of the U of the first cage (1) comprises at its top one tab (13) permitting the mounting and the withrawal of this cage into and out of the second cage (2) by pinching of the said legs.

6. Nut according to one of claims 1 to 5, characterized in that the second U-shaped cage (2) comprises a base (2a) carrying a rivet neck (15) as well as at least one pin (18) preventing this cage from rotating once secured through riveting to any piece.

7. Nut according to claim 6, characterized in that the aforesaid rivet neck (15) is carried by a plate (16) interposed between the base (1a, 2a) of the U of the first (1) and of the second cage (2) and goes through the base (2a) of the U of the second cage (2).

8. Nut according to claim 3, characterized in that both tabs (12) of each leg (4) of the U of the second cage (2) define between each other a groove (14) inside which the lugs (8) belonging to the nut collar (7) and going through the legs (5) of the U of the first cage (1) can move.

Fig. 1

Fig. 2